# EUROPÄISCHE PATENTANMELDUNG

(11) **EP 1 416 749 A1**
(43) Veröffentlichungstag der Anmeldung: **06.05.2004**
(21) Anmeldenummer: 02024245.9
(22) Anmeldetag: 31.10.2002
(51) Int. Cl.: H04Q 7/30

(54) **Signalisierungsverfahren zur Verhandlung des beim Iu Framing Protokol verwendeten Modes**

(71) Anmelder: SIEMENS AKTIENGESELLSCHAFT, 80333 München (DE)
(72) Erfinder: Belling, Thomas, Dr., 81477 München (DE); Pfeil, Bernhard, 81669 München (DE); Seitter, Norbert, 82008 Unterhaching (DE)

(57) **Zusammenfassung**

Die erfindungsgemäße Verhandlung eines Modus des Iu Framing Protokolls zwischen Knoten des Core-Netzes eines Mobilfunknetzes macht eine Umsetzung von Nutzdaten zwischen dem "Transparent Mode" und dem "Support Mode" beim Übergang zwischen Radio-Acces_Netz und Core-Netz unnötig und erlaubt es in bestimmten Fällen, den "transparent mode" im Corenetz zu verwenden. Die erfindungsgemäße Verhandlung verringert damit den Hardwareaufwand und die erforderliche Rechenleistung.

## Beschreibung

Aus dem (unter http://www.etsi.org verfügbaren) Standard 3GPP TS 25.415 / 29.415 ist die Verwendung eines sogenannten Iu Framing Protokolls zur Übertragung von Nutzverkehr (Sprache oder Daten) in der sogenannten Cs-Domäne in einem Mobilfunknetz gemäß 3GPP Standard bekannt. Das Iu Framing Protokoll besitzt zwei Modi, den sogenannten "Support Mode" und den sogenannten "Transparent Mode". Während der "Support Mode" eine besonders geschützte und kontrollierte Übertragung ermöglicht, aber in der Regel zur Unterstützung eine dedizierte Hardware benötigt, bietet der "Transparent Mode" eine einfache ungeschützte, aber damit auch deutlich weniger aufwendige Übertragung.

Zwischen dem sogenannten Core-Netz und dem sogenannten Radio-Access Netz des Mobilfunknetzes, am sogenannten "Iu-Cs Interface", wird abhängig vom gewählten Dienst wahlweise der "Transparent Mode" oder der "Support Mode" verwendet. Dabei wird für sogenannte "Cs Datendienste" zwischen der sogenannten "Interworking Function", die sich am Rande des sogenannten Core-Netzes befindet, und dem Mobilen Endgerät, dem sogenannten "User Equipement", ausgehandelt, welcher Mode verwendet wird.

Dagegen wird im Core-Netz, am sogenannten "Nb Interface", grundsätzlich der "Support Mode" verwendet. Grund hierfür ist, dass es in der sogenannten "call control Signalisierung" mit Hilfe des sogenannten "BICC" Protokolls (ITU-T Q.1902.4), nicht möglich ist auszudrücken, welcher Mode verwendet werden soll. Das Iu Framing Protokoll ermöglicht es ebenfalls nicht, in der Nutzverbindung direkt zu erkennen oder auszuhandeln, welcher Mode verwendet wird. Somit ist eine Konfiguration des Modes an jedem Netzknoten in der Nutzverbindung erforderlich.

Für Dienste, die eigentlich die besonders geschützte Übertragung im "Support Mode" nicht benötigen und am Iu cs interface auch den "Transparent Mode" nutzen, wird daher eine Umsetzung in den "Support Mode" beim Übergang in das Core-Netz erzwungen. Dies trifft insbesondere auf eine Reihe von Datendiensten zu.
Für die Umsetzung ist zusätzliche Rechenleistung und auch in der Regel dedizierte Hardware erforderlich. Des weiteren ist auch zusätzliche Rechenleistung und möglicherweise Hardware für den Support Mode in Knoten innerhalb des "Core-Netzes" und am Knoten am Übergang zwischen "Core-Netz" und öffentlichem Telefonnetz (dem sogenannten "PSTN") erforderlich.

Aufgabe der vorliegenden Erfindung ist es, möglichst einfach und effizient den Aufwand zur Umsetzung zwischen dem "Support Mode" und dem "Transparent Mode" zwischen dem corenet und zumindest dem radio access network (Funkschnittstellenteil eines Mobilfunknetzes) zu verringern, Die Aufgabe wird jeweils durch die Gegenstände der unabhängigen Ansprüche gelöst.

Die erfindungsgemäße Verhandlung eines Modus zwischen Mobilfunknetzelementen (wie einem Mobilfunkendgerät= user equipment (MS)und einer interworking function einer MSC etc) macht eine Umsetzung von Nutzdaten zwischen dem "Transparent Mode" und dem "Support Mode" beim Übergang zwischen dem Core-Netz und dem Radio Access Network eines Mobilfunknetzes unnötig und verringert damit den Hardwareaufwand und die erforderliche Rechenleistung.

Die BICC Signalisierung wird zweckmäßig so erweitert, dass es möglich ist, auszuhandeln, ob der "Transparent Mode" oder der "Support Mode" verwendet werden soll. Es wird für Cs Datendienste ermöglicht, dass die zwischen der "Interworking Function" und dem User Equipment ("MS") ausgehandelte Entscheidung von der "Interworking Function" aus im Corenetz verbreitet wird.

Dazu kann ein neues Informationselement in BICC eingeführt werden, das beim Verbindungsaufbau in der sogenannten "IAM" Nachricht befördert wird. Dieses Informationselement wird im Folgenden "Bevorzugter Iu FP Mode" genannt. Es kann drei Werte annehmen, die ausdrücken, dass der die IAM Message sendende Knoten, der sogenannte "originating node" (Herkunftsknoten), den "Support Mode" oder den "Transparent Mode" wünscht, oder aber wünscht, dass der die IAM Message empfangende Knoten, der sogenannte "Terminating Node" (Endknoten), die Entscheidung trifft. Die entsprechenden Werte werden im Folgenden "Bevorzugter Support Mode", "Bevorzugter Transparent Mode", bzw. "Anfrage Mode" bezeichnet.

Zusätzlich kann ein neues Informationselement in BICC eingeführt werden, das beim Verbindungsaufbau in der sogenannten "APM" Nachricht befördert wird. Dieses Informationselement wird im Folgenden "Gewählter Iu FP Mode" genannt. Es kann zwei Werte annehmen, die ausdrücken, dass der die IAM Message empfangende und dann die APM Message sendende Knoten, der sogenannte "terminating node", den "Support Mode" oder den "Transparent Mode" wünscht. Die entsprechenden Werte werden im Folgenden "Gewählter Support Mode", bzw. "Gewählter Transparent Mode" bezeichnet.

Knoten, welche die IAM Nachricht weiterreichen, d.h. sogenannte "transit nodes" (Transitkonten), sollen zweckmäßig das "Bevorzugter Iu FP Mode" Informationselement ebenfalls weiterreichen. Wenn ein transit node das neue Informationselement "Bevorzugter Iu FP Mode" nicht erkennt, soll er es nicht weiterreichen. Dieses gewünschte Fehler-Verhalten kann zusammen mit dem neuen Informationselement signalisiert werden.

Der "terminating Node", der die IAM Nachricht mit dem "Bevorzugter Iu FP Mode" Informationselement empfängt, soll in der APM Nachricht das "Gewählter Iu FP Mode" Informationselement einfügen. Wenn in dem "Bevorzugter Iu FP Mode" Informationselement bereits ein Iu FP Mode ausgewählt ist, soll der terminating Node diesen Mode auch in dem "Gewählter Iu FP Mode" Informationselement verwenden. Wenn das "Bevorzugter Iu FP Mode" Informationselement den Wert "Anfrage Mode" besitzt, soll der terminating Node einen Mode (Mode=Modus) wählen und ihn dem "Gewählter Iu FP Mode" Informationselement signalisieren. Wenn ein terminating node das neue Informationselement "Bevorzugter Iu FP Mode" nicht erkennt, soll er es ignorieren und somit das "Gewählter Iu FP Mode" Informationselement nicht in die APM Nachricht einfügen . Dieses gewünschte Fehler-Verhalten wird zusammen mit dem neuen Informationselement signalisiert.

Knoten (transit node oder originating node), die eine APM Message mit dem "Gewählter Iu FP Mode" Informationselement empfangen, sollen das Iu Framing Protokoll in dem entsprechenden Mode verwenden. Knoten, die eine APM Message ohne das "Gewählter Iu FP Mode" Informationselement empfangen, sollen das Iu Framing Protokoll in dem "Support Mode" verwenden.

Im Falle einer Verbindung zwischen zwei Mobilfunknetzen kann die beschriebene Signalisierung auch zwischen ihnen verwendet werden.

Die Erfindung ermöglicht es, ein Umwandeln von Transparent Mode und Support Mode des Iu Framing Protokolls zwischen Core-Netz und Radio-Access-Netz zu vermeiden. Damit wird in den Knoten des "Core-Netzes" zur Unterstützung des "Support Mode" zusätzlich erforderliche Rechenleistung und möglicherweise auch Hardware gespart.

Der beschriebene Algorithmus ist den speziellen Bedürfnissen für "CS Datendienste" im 3GPP Mobilfunknetz anpassbar:
Es ist möglich, dass wahlweise der "originating Node" oder der "terminating Node" den Mode auswählt. Dadurch kann die Entscheidung immer von der "Interworking Function" für Datendienste in Abstimmung mit dem "User Equipment" (= symbolisiert durch "MS" in der Zeichnung) getroffen werden. Eine Rückwärtskompatibilität mit Knoten, welche die beschriebenen Erweiterungen in der Signalisierung nicht unterstützen, wird geboten. Somit kann die Erweiterung schrittweise in dem Mobilfunknetz eingeführt werden.

Weitere Merkmale und Vorteile ergeben sich aus den Ansprüchen und der nachfolgenden Erläuterung eines Ausführungsbeispiels anhand der Zeichnung. Dabei zeigt:
Fig. 1 eine erfindungsgemäße Aushandlung eines der beiden genannten Modi ("Transparent Mode" /"Support Mode") zur Übertragung der Daten (Nutzdaten) in einem Mobilfunknetz im Falle eines Mobile terminating call (Daten für oder Anruf bei einem User equipment=MS),
Fig. 2 eine erfindungsgemäße Aushandlung eines der beiden genannten Modi ("Transparent Mode" /"Support Mode") zur Übertragung der Nutzdaten (Nutzdaten) in einem Mobilfunknetz im Falle eines Mobile originating call (Nutzdaten oder Anruf stammen von einem User equipment=MS),
Fig. 3 eine erfindungsgemäße Aushandlung eines zu für die Übertragung der Nutzdaten (Nutzdaten) in einem Mobilfunknetz zu verwendenden der beiden genannten Modi ("Transparent Mode" /"Support Mode") nach einem Inter-MSC Handover,
Fig. 4 die Rückwärtskomptibilität des Verfahrens für bereits exisiterende Mobilfunknetzelemente.

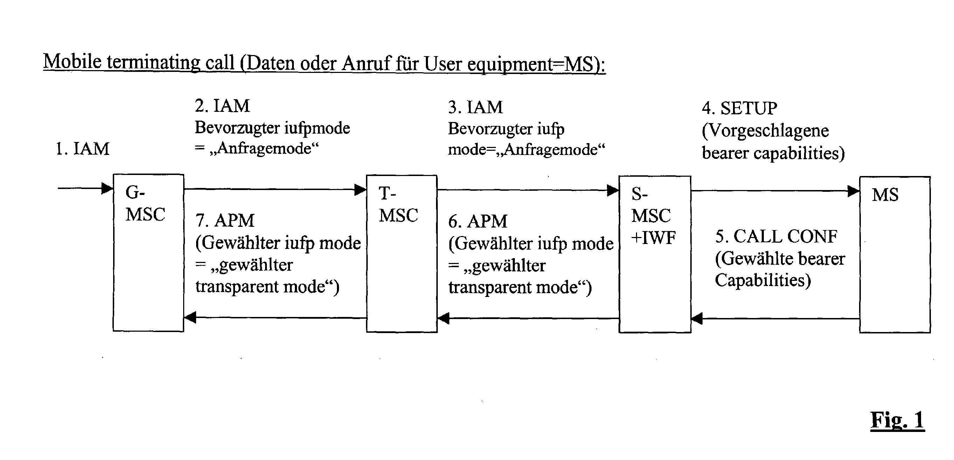

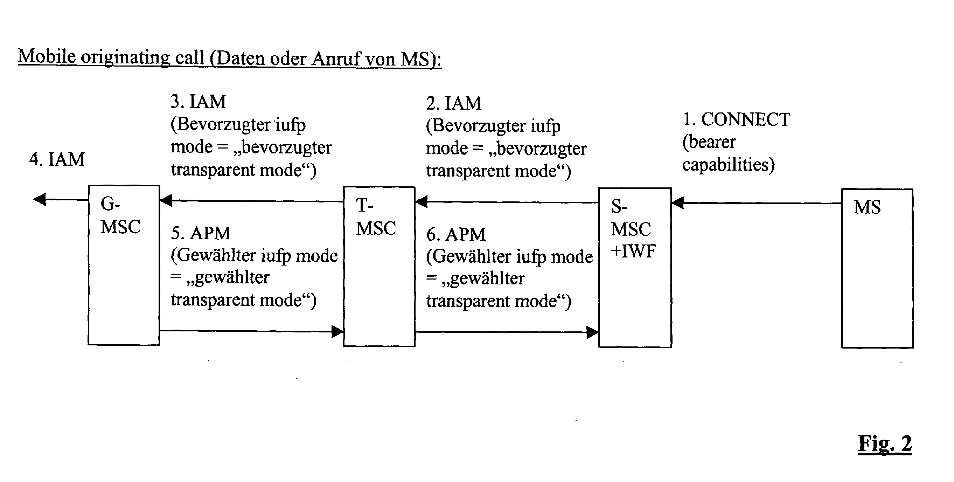

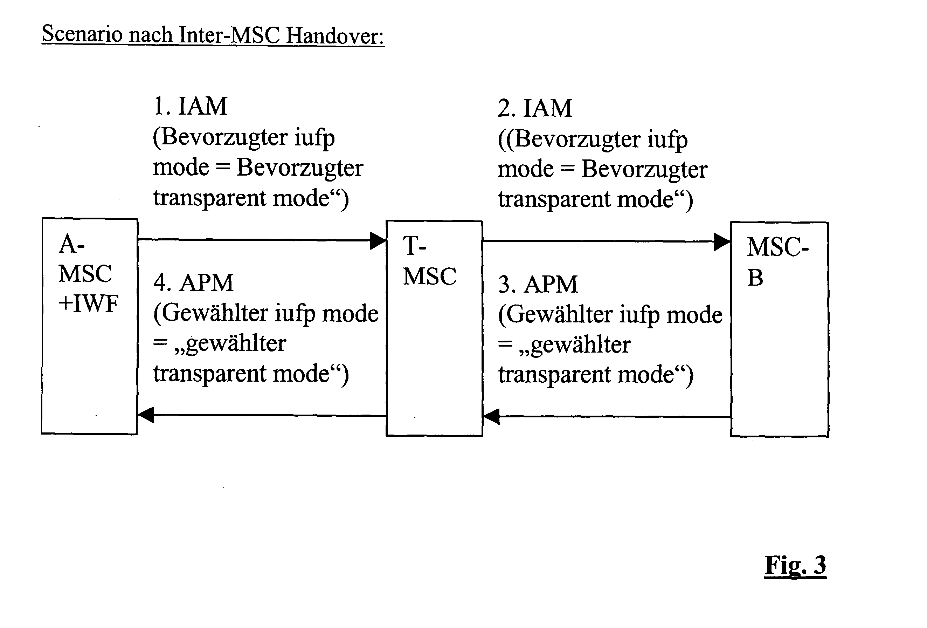

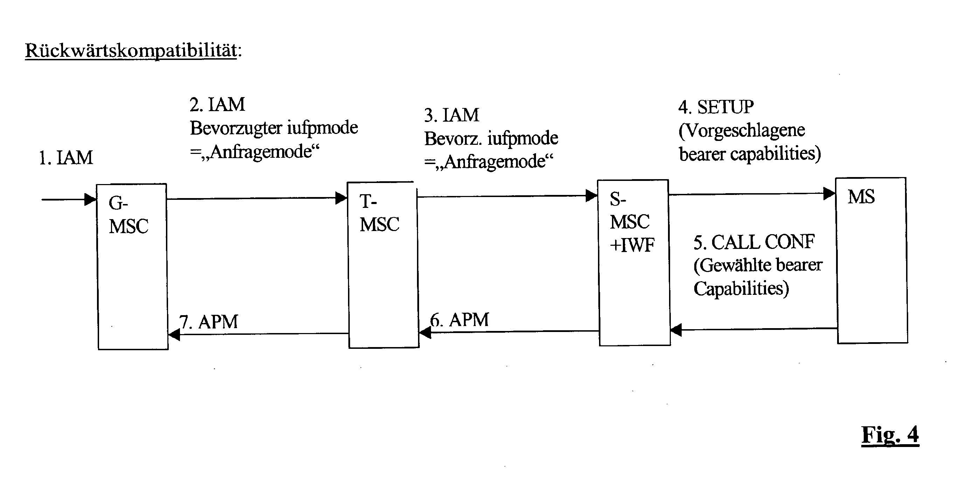

Zur Beschreibung der Ausführungsbeispiele werden die folgenden Abkürzungen und Fachbegriffe verwendet:
MSC: Mobile Switching Center: Knoten in der Cs Domäne des Core-Netzes eines 3GPP Mobilfunknetzes.
G-MSC: Gateway-MSC: Netzknoten am Rand des 3GPP Mobilfunknetzes zum PSTN.
T-MSC: Transit-MSC: Transit Knoten im Core-Netz
S-MSC: Serving-MSC: Netzknoten am Rand zwischen Core-Netz und
Radio-Access Netz
IWF: Interworking Function für Cs Datendienste.
A-MSC: Anchor MSC: Dort befindet sich die IWF nach sogenannten "Inter-MSC Handover"
MSC-B: MSC am Rand zwischen Core-Netz und Radio-Access Netz nach sogenannten "Inter-MSC Handover"
Mobile originating call: Von einem Mobilfunkendgerät stammender Anruf oder Datentransfer)
Mobile terminating call: Zu einem Mobilfunkendgerät verlaufender Anruf oder Datentransfer
Bevorzugter iufp mode: Bevorzugter iufp mode (Hier wird in der Nachricht IAM angegeben , dass der "terminating node" den Modus des Iu Framing Protokolls wählen soll ("Anfragemodus", Fig. 1 und Fig. 4), bzw. dass der "transparent mode" gewünscht wird ("Bevorzugter transparent mode", Fig.2 und Fig.3).)
Bevorzugter transparent mode: Bevorzugter transparenter modus Gewählter iufp mode: Verhandelter iufp mode (Hier wird in der Nachricht APM angegeben, dass der "transparent mode" verhandelt wurde und nun benutzt werden soll. (Fig. 1, Fig. 2 und Fig. 3)
Gewählter transparent mode: Gewählter "transparent mode" User Equipment ("MS"): ein Mobilfunkendgerät mit MS, SIM, Zubehör etc. (in der Zeichnung als "MS" bezeichnet)
Radio-Access-Net(z): Funkeinrichtungen des Mobilfunknetzes, z.B. RNC, Node-B, etc
Core-Net(z): Kernnetz eines Mobilfunknetzes, insbesondere die Übermittlungsknoten zwischen Funkeinrichtungen des Mobilfunknetzes , z.B. Mediagateways, G-MSCs, T-MSCs, evtl. S-MSCs etc.

Im in Figur 1 vereinfacht schematisch dargestellten Beispiel soll eine Nutzdaten- Verbindung von einem oder über einen Vermittlungsknoten "G-MSC" zu einem Mobilfunkendgerät User Equipment ("MS") aufgebaut werden und es soll erfindungsgemäß die Notwendigkeit eines Umwandelns der Codierung von Nutz-Nutzdaten zwischen dem Transparent Mode und dem Support Mode des Iu Framing Protokolls zwischen Core-Netz und Radio-Access-Netz vermieden werden.
Der Vermittlungsknoten "G-MSC" erhält (Schritt 1.) eine Signalisierungsnachricht "IAM" von einem Vermittlungsknoten außerhalb des Mobilfunknetzes und sendet (Schritt 2.) eine Signalisierungsnachricht "IAM" mit einer Anfrage betreffend den vom User Equipment ("MS") gewünschten Modus ("transparent mode" oder "support mode") an einen Transitknoten "T-MSC" des Mobilfunknetzes, der sie in einer IAM- Nachricht an einen Schnittstellenknoten "S-MSC" am Übergang zwischen Core-Netz und Radio-Access Netz weiterreicht (Schritt 3.), der die Anfrage nach dem vom User Equipment ("MS") gewünschten Modus der Datenübertragung (dies beinhaltet unter anderem "transparent mode" oder "support mode") mit einem Vorschlag ("suggested bearer capabilities"= Vorgeschlagener Modus der Datenübertragung) zu einem Mobilfunkendgerät User Equipment ("MS") in einer "Setup"- Nachricht weiterleitet (Schritt 4.). Das Mobilfunkendgerät User Equipment ("MS") sendet (Schritt 5.) in einer "Call Conf"- Nachricht den von ihm gewünschten (und hier aus Vorschlägen des S-MSC ausgewählten) Modus der Datenübertragung (dies beinhaltet unter anderem "transparent mode" oder "support mode") an einen Knoten "S-MSC", der einen Modus auswählt (und damit festsetzt) und ihn in einer Signalisierungsnachricht "APM" als Gewählter iufp mode (Ausverhandelter iufp mode) an die "T-MSC" weitermeldet (Schritt 6), die ihn als "APM"-Nachricht an den Knoten "G-MSC" weiterleitet (Schritt 7). In Figur 1 befindet sich innerhalb des Knoten S-MSC die "interworking function" für Datendienste Die "interworking function" ist in der Verhandlung mit dem "MS" beteiligt (Schritt 3 und Schritt 4) und legt den gewünschten Modus ("transparent mode") fest, der dann verwendet werden soll.

Beim in Figur 2 dargestellten Beispiel wird der Rufaufbau durch eine Nachricht "CONNECT" des Mobilfunkendgeräts User Equipment ("MS") an den Knoten S-MSC angestossen (Schritt 1.). In der Nachricht "CONNECT" schlägt das Mobilfunkendgerät auch einen Modus der Datenübertragung vor (dies beinhaltet unter anderem "transparent mode" oder "support mode").Die Interworking function "IWF" des Knoten S-MSC schlägt den "transparent mode" als bevorzugten Modus in einer "IAM"-Nachricht einem Knoten "T-MSC" vor (Schritt 2.), der eine "IAM"-Nachricht an einen Knoten "G-MSC" weiterleitet (Schritt 3.), der ihn (Schritt 4.) zu einer nicht dargestellten Einrichtung in eines anderen Netzes weitermelden kann, oder aber selbst die Verhandlung des Iu Framing Protokoll Modes terminieren kann., Falls der Knoten "G-MSC" die Verhandlung terminiert, fügt er selbst den ausgewählten Modus (hier "transparent mode") in einer "APM"-Nachricht ein. Andernfalls reicht er den ausgewählten Modus von einer (hier nicht dargestellten) "APM" Nachricht aus dem externen Netz weiter, Der Knoten "G-MSC" sendet den ausgewählten Modus (hier "transparent mode") in der "APM"-Nachricht an einen Knoten "T-MSC" (Schritt 5.), der die "APM"-Nachricht an einen Knoten "S-MSC" weiterleitet (Schritt 6.). Da auch hier der Vorschlag zur Verwendung eines bestimmten Modus von einer IWF (eines Knotens S-MSC) kommt und diesem Vorschlag (von den anderen Elementen nur) zugestimmt wird, wird der verwendete Modus von der IWF festgelegt (soweit der Modus anderen Knoten möglich ist und diese deshalb zustimmen).

Beim in Figur 3 dargestellten, sogenannten "Inter-MSC Handover" kann die bisherige S-MSC zur A-MSC werden. Die IWF verbleibt in dieser MSC. Es wird eine neue MSC-B am Rand zum Radio-Access-Netz verwendet. Dazu muss eine neue Nutzverbindungabschnitt zwischen A-MSC und MSC-B aufgebaut werden. Die A-MSC benützt die dargestellte Signalisierung, um den bisherigen Iu FP Mode (der der "interworking function" innerhalb der A-MSC bekannt ist) auch für den neuen Nutzverbindungsabschnitt zu konfigurieren.

Figur 4 verdeutlicht schematisch, wie eine Rückwärtskomptibilität erfindungsgemäßer Elemente und Abläufe ermöglicht werden kann: Im vorliegenden Beispiel eines "Mobile Terminating Calls" unterstützt die S-MSC die erfindungsgemässen Erweiterungen der Signalisierung nicht. Sie ignoriert das neue Informationselement auf Grund der mit dem Informationselement mitsignalisierten Angaben zur Abwärtskompatibilität. Als Folge wird bei allen Netzelementen im Core-Netz das Iu Framing Protocol im Support Mode verwendet.

## Patentansprüche

1. Verfahren zum Übertragen von Nutzdaten in mindestens einem Telekommunikationsnetz, das zumindest in einigen Teilen die beiden Iu-Framing-Protocol-Modi "Support Mode" und "Transparent Mode" unterstützt,
wobei zwischen Elementen des Telekommunikationsnetzes (G-MSC, T-MSC, S-MSC, etc) verhandelt wird (IAM/APM), in welchem der beiden Modi eine Übertragung der Nutzdaten zwischen Vermittlungsknoten des mindestens einen Telekommunikationsnetzes erfolgen soll.

2. Verfahren nach Anspruch 1,
**dadurch gekennzeichnet, dass** das Aushandeln der Modi zwischen Vermittlungsknoten eines Mobilfunknetzes oder mehrer Mobilfunknetze (G-MSC, T-MSC, S-MSC, etc) erfolgt.

3. Verfahren nach einem der vorhergehenden Ansprüche,
**dadurch gekennzeichnet, dass** der die Verhandlung auslösende Knoten einen Modus auswählen kann und dabei die Entscheidung dem zur Verhandlung aufgeforderten Knoten überlassen kann.

4. Verfahren nach einem der vorhergehenden Ansprüche,
**dadurch gekennzeichnet, dass** der die Verhandelung auslösende Knoten (S-MSC oder A-MSC) eine "interworking function" für Datendienste enthält.

5. Verfahren nach einem der vorhergehenden Ansprüche,
**dadurch gekennzeichnet, dass** Mobilfunknetz-Corenet-Komponenten, insbesondere Vermittlungsknoten (S-MSC, A-MSC, T-MSC, G-MSC, MSC-B), beide Modi unterstützen.

6. Verfahren nach einem der vorhergehenden Ansprüche **dadurch gekennzeichnet, dass** die Übertragung von Nutzdaten von einem Radio access network Vermittlungsknoten zu Komponenten des Mobilfunk-Corenet (S-MSC, A-MSC, T-MSC, G-MSC, MSC-B) unter Beibehaltung des verwendeten Modus (z. B. "Transparent Mode") erfolgt.

7. Verfahren nach einem der vorhergehenden Ansprüche,
**dadurch gekennzeichnet, dass** zur Aushandlung der Modi der von einem Element des Mobilfunknetzes (Interworking Function) bevorzugte Modus, oder eine Anfrage nach dem bevorzugten Modus ("Bevorzugter Iu-FP Mode") beim Verbindungsaufbau zwischen den den Modus verhandelnden Elementen übertragen wird

8. Verfahren nach Anspruch 7,
**dadurch gekennzeichnet, dass** diese Übertragung in der BICC "IAM" Nachricht (ITU-T Q.1902.4) erfolgt.

9. Verfahren nach einem der vorhergehenden Ansprüche,
**dadurch gekennzeichnet, dass** der von den Elementen des Mobilfunknetzes beim Verbindungsaufbau ausgehandelte Modus ("Gewählter IuFP Mode") beim Verbindungsaufbau übermittelt wird.

10. Verfahren nach Anspruch 9,
**dadurch gekennzeichnet, dass** diese Übertragung in einer BICC "APM" Nachricht (ITU-T Q.1902.4) erfolgt.

11. Vorrichtung (S-MSC, A-MSC, T-MSC, G-MSC, MSC-B) zur Durchführung des Verfahrens nach einem der vorhergehenden Ansprüche.
